# EUROPEAN PATENT APPLICATION

(11) **EP 4 703 170 A1**
(43) Date of publication of application: **04.03.2026**
(21) Application number: 25196734.5
(22) Date of filing: 19.08.2025
(51) Int. Cl.: B60K 1/04

(54) **PICKUP TRUCK**

(30) Priority: 29.08.2024 JP 2024147276
(71) Applicant: TOYOTA JIDOSHA KABUSHIKI KAISHA, Toyota-shi, Aichi-ken 471-8571 (JP)
(72) Inventor: SEGAWA, Taku, Toyota-shi, 471-8571 (JP); YANAGIDA, Tomoaki, Toyota-shi, 471-8571 (JP); YOSHIDA, Michio, Toyota-shi, 471-8571 (JP); NOGAWA, Shinichiro, Toyota-shi, 471-8571 (JP); TAKADA, Norifumi, Toyota-shi, 471-8571 (JP)
(74) Representative: D Young & Co LLP

(57) **Abstract**

A pickup truck includes a cabin section defining a passenger compartment includes a front seat and a rear seat. A hood is located frontward from the cabin section. A cargo section including a cargo bed having an upper opening is located rearward from the cabin section. In the pickup truck, a front end of a battery unit is arranged downward from the rear seat of the cabin section.

## Description

### BACKGROUND

### 1. Field

The following description relates to a pickup truck.

### 2. Description of Related Art

One form of a vehicle may be a pickup truck as disclosed in Japanese Laid-Open Patent Publication No. 2020-044955 that includes a cabin and a cargo bed located behind the cabin. The upper part of the vehicle is open above the cargo bed.

When the pickup truck is a plug-in hybrid electric vehicle (PHEV) or a battery electric vehicle (BEV), a battery unit is mounted on the vehicle. When mounting a large battery unit having a large-capacity to increase the driving range or the like, the battery unit will reduce the space that can be used for vehicle occupants and reduce the space that can be used for cargo bed in the pickup truck.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one general aspect, a pickup truck includes a cabin section including a passenger compartment, a hood located in frontward from the cabin section, a cargo section including a cargo bed having an upper opening and located rearward from the cabin section, a motor supplied with electric power supply to generate rotational power transmitted to wheels, a front seat arranged in the passenger compartment, a rear seat arranged in the passenger compartment and located rearward from the front seat, and a battery unit that supplies electric power to the motor and includes battery stacks chargeable by an external power source. The cabin section includes a front cabin area located frontward from the rear seat and a rear cabin area located rearward from the front cabin area. The battery unit includes a front end arranged in the rear cabin area.

Other features and aspects will be apparent from the following detailed description, the drawings, and the claims.

### BRIEF DESCRIPTION OF THE DRAWINGS

Fig. 1 is a side view illustrating the layout of elements in a first embodiment of a pickup truck.
Fig. 2 is a plan view schematically illustrating the layout of a drive system, frames, an exhaust pipe, and a fuel tank in the first embodiment of the pickup truck.
Fig. 3 is a plan view schematically illustrating the layout of a battery unit in the first embodiment of the pickup truck.
Fig. 4 is a side view schematically illustrating the layout of a battery unit in a second embodiment of the pickup truck.
Fig. 5 is a plan view schematically illustrating the layout of the battery unit in the second embodiment of the pickup truck.
Fig. 6 is a diagram illustrating the structure and the layout of a battery unit in a modified example.
Fig. 7 is a diagram illustrating the structure and the layout of a battery unit in another modified example.

Throughout the drawings and the detailed description, the same reference numerals refer to the same elements. The drawings may not be to scale, and the relative size, proportions, and depiction of elements in the drawings may be exaggerated for clarity, illustration, and convenience.

### DETAILED DESCRIPTION

This description provides a comprehensive understanding of the methods, apparatuses, and/or systems described. Modifications and equivalents of the methods, apparatuses, and/or systems described are apparent to one of ordinary skill in the art. Sequences of operations are exemplary, and may be changed as apparent to one of ordinary skill in the art, with the exception of operations necessarily occurring in a certain order. Descriptions of functions and constructions that are well known to one of ordinary skill in the art may be omitted.

Exemplary embodiments may have different forms, and are not limited to the examples described. However, the examples described are thorough and complete, and convey the full scope of the disclosure to one of ordinary skill in the art.

In this specification, "at least one of A and B" should be understood to mean "only A, only B, or both A and B."

### First Embodiment

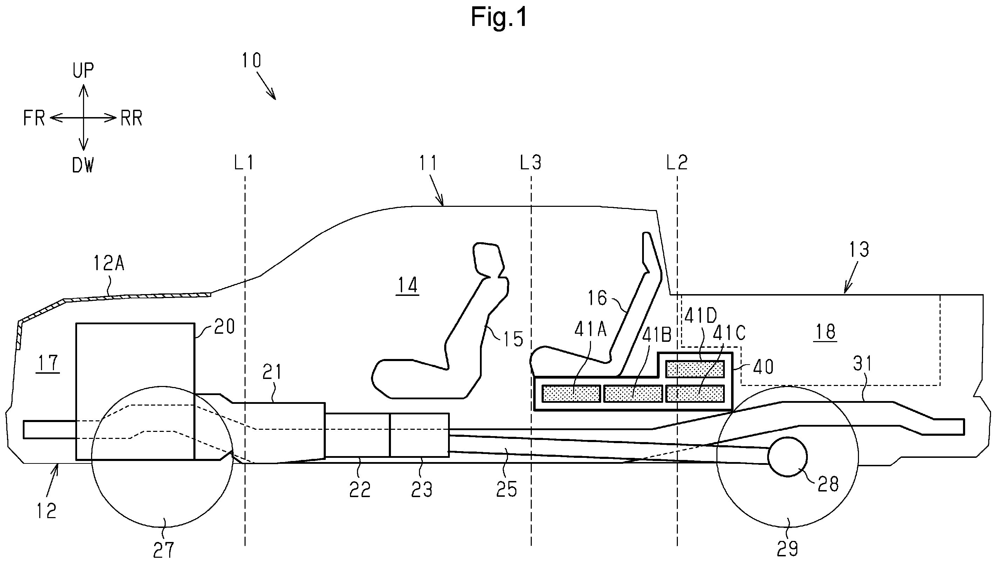

A first embodiment of a pickup truck will now be described with reference to Figs. 1 to 3. The pickup truck of the present embodiment is a plug-in hybrid electric vehicle (PHEV). The arrows labeled "FR", "RR", "UP", "DW", "LF", and "RF" indicate the frontward, rearward, upward, downward, leftward, and rightward directions, respectively, using the forward moving direction of the vehicle as the frame of reference.

As shown in Fig. 1, a pickup truck 10 includes three sections, a cabin section 11, a front section 12 located in the frontward direction FR from the cabin section 11, and a cargo section 13 located in the rearward direction RR from the cabin section 11. The cabin section 11 includes a passenger compartment 14 where the occupants are seated. The front section 12 includes an engine compartment 17 in which a longitudinal engine 20 is arranged. In the pickup truck 10 of the present embodiment, the engine 20 has cylinders in a V-shaped arrangement. Further, the front section 12 includes a hood 12A in the upward direction UP from the engine compartment 17. That is, the hood 12A covers the engine compartment 17. The cargo section 13 includes a cargo bed 18 that is open in the upward direction UP.

In the drawings, the cabin section 11 of the pickup truck 10 is defined in the rearward direction RR from a broken line L1 and in the frontward direction FR from a broken line L2. The front section 12 of the pickup truck 10 is defined in the frontward direction FR from the broken line L1. The cargo section 13 of the pickup truck 10 is defined in the rearward direction RR from the broken line L2. The broken line L1 is where the engine compartment 17 is partitioned from the passenger compartment 14, and may be at the same position as the instrument panel. The broken line L2 is where the front wall of the cargo bed 18 is located and may be at the same position as the rear wall of the passenger compartment 14.

In the passenger compartment 14, a front seat 15 and a rear seat 16 located in the rearward direction RR from the front seat 15 are arranged in two rows. In the description hereafter, in the cabin section 11, the area in the frontward direction FR from the rear seat 16 will be referred to as the front cabin area and the area in the rearward direction RR from the front cabin area will be referred to as the rear cabin area. In the drawings, the area of the cabin section 11 in the frontward direction FR from a broken line L3 is the front cabin area. The area of the cabin section 11 in the rearward direction RR from the broken line L3 is the rear cabin area. The broken line L3 may be the located at the same position as the front end of the rear seat 16.

### Structure of Drive System

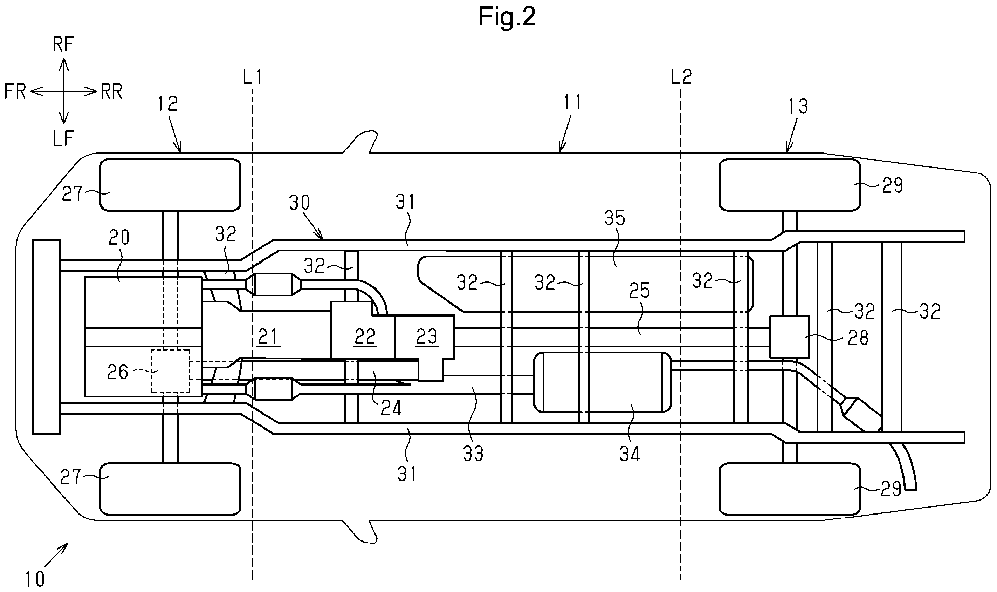

The structure of the drive system of the pickup truck 10 will now be described with reference to Fig. 2. The drive system of the pickup truck 10 includes an engine 20, a transmission 21, a motor 22, and a transfer case 23. Further, the drive system of the pickup truck 10 includes a drive shaft 24 for front wheels and a drive shaft 25 for rear wheels. The drive shafts 24 and 25 are each connected by the transfer case 23, the motor 22, and the transmission 21 to the engine 20. Moreover, the drive shaft 24 for the front wheels is connected to the right and left front wheels by a differential 26. The drive shaft 25 for the rear wheels is connected to the right and left rear wheels 29 by a differential 28.

### Underfloor Structure

The underfloor structure of the pickup truck 10 will now be described with reference to the Fig. 2. The underfloor of the pickup truck 10 refers to a section located in a downward direction DW from the passenger compartment 14 and a floor panel of the cargo bed 18.

A frame 30 is arranged under the floor of the passenger compartment 14 and under the cargo bed 18. The frame 30 is a ladder-shaped frame that includes right and left side member 31 and cross members 32 connecting the two side members 31. The left and right side members 31 extend in the front-rear direction and are located in the downward direction DW from the passenger compartment 14 of the cabin section 11. As shown in Fig. 2, the drive shaft 25 for the rear wheels extends in the front-rear direction and are located in the downward direction DW from the passenger compartment 14 of the cabin section 11.

Furthermore, an exhaust pipe 33 is arranged under the floor of the pickup truck 10 to guide exhaust gas from the engine 20 in the rearward direction RR. The exhaust pipe 33 extends in the front-rear direction and are located in the downward direction DW from the passenger compartment 14 of the cabin section 11. A muffler 34 is arranged in the exhaust pipe 33. The muffler 34 is located in downward direction DW from the passenger compartment 14 of the cabin section 11. Further, a fuel tank 35 containing fuel for the engine 20 is arranged under the floor of the pickup truck 10. The drive shaft 25 for the rear wheels is arranged in a section between the exhaust pipe 33 and the fuel tank 35 in the transverse direction.

### Structure and Layout of Battery Unit

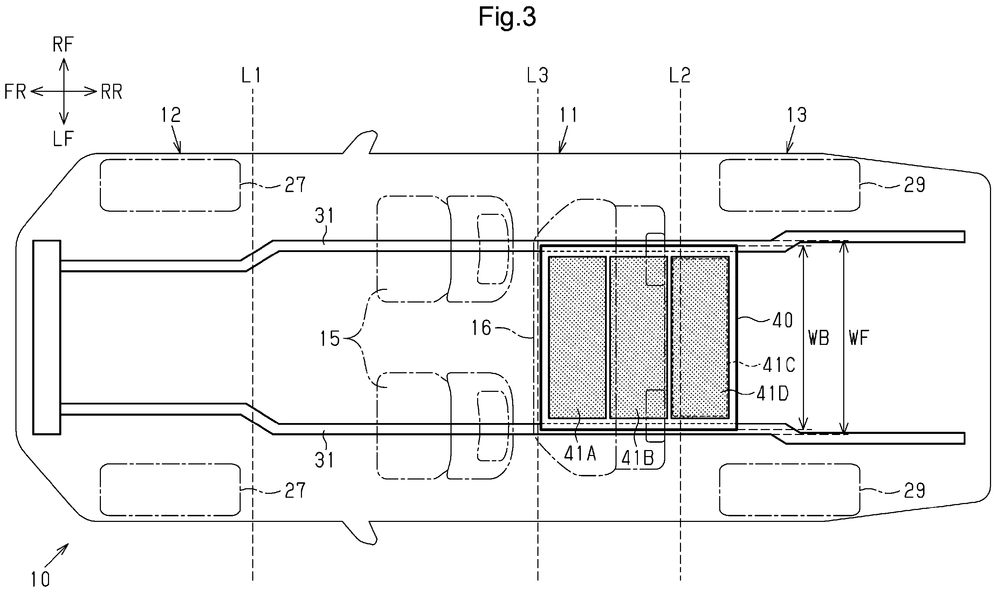

The layout of a battery unit 40 in the pickup truck 10 of the present embodiment will now be described with reference to Figs. 1 and 3.

The pickup truck 10 includes the battery unit 40. The battery unit 40 includes battery stacks 41A to 41D, which are chargeable by an external power source, and are connected integrally with one another. The battery stacks 41A to 41D are each a group of cells packaged together. The battery unit 40 includes the four battery stacks 41A to 41D. The motor 22 is supplied with electric power from the battery unit 40 and generates rotational power transmitted to each wheel.

The battery stack 41A that is located at the frontmost part of the battery unit 40 in the frontward direction FR is arranged in the cabin section 11 in the downward direction DW from the rear seat 16 and in the upward direction UP from the side members 31. That is, the battery stack 41A is arranged below the rear seat 16 and above the side members 31. The two battery stacks 41B and 41C are arranged next to each other in the front-rear direction and located in the rearward direction RR from the battery stack 41A. The battery stack 41D is located in the upward direction UP from the battery stack 41C, which is the rearmost one of the three battery stacks 41A to 41C in the rearward direction RR. The battery stacks 41A and 41B are entirely located within the cabin section 11. The battery stacks 41C and 41D each include a front portion located in the cabin section 11 and a rear portion located in the cargo section 13.

The battery unit 40 includes a first battery stack group formed by the battery stacks 41A to 41C arranged next to one another in the front-rear direction, with the battery stack 41A, which is located in the downward direction DW from the rear seat 16, positioned at the front of the group. The battery stacks 41A to 41C of the first battery stack group define, for example, "a first battery stack". Further, the battery unit 40 includes a second battery stack group formed by the battery stack 41D. The second battery stack group is located in the rearward direction RR from the rear seat 16 and arranged in the upward direction UP from the first battery stack group. The battery stack 41D of the second battery stack group defines, for example, "a second battery stack". The second battery stack group is located in the rearward direction RR from a rear end of the rear seat 16.

In the battery unit 40, the front end of the battery unit 40 is arranged in the rear cabin area. Further, the front end of the battery unit 40 is located in the downward direction DW from the rear seat 16. Moreover, the battery unit 40 is arranged in the upward direction UP from the side members 31 of the frame 30, the drive shaft 25 for the rear wheels, the exhaust pipe 33, and the fuel tank 35.

As shown in Fig. 3, the battery unit 40 is arranged inward of the two side members 31 in the vehicle width direction (WB<WF). In Fig. 3, "WB" indicates the width of the battery unit 40, that is, the length of the battery unit in the vehicle width direction. Further, "WF" indicates the distance between the outer surfaces of the two side members 31 where the battery unit 40 is located in the vehicle width direction.

### Operation and Advantage of First Embodiment

The operation and the advantages of the first embodiment will now be described.

The frame 30, the drive shaft 25, the exhaust pipe 33, the fuel tank 35, and the like are arranged under the floor of the pickup truck 10. Under the floor of the pickup truck 10, there may be not enough space for the battery unit 40. Thus, in the pickup truck 10 of the present embodiment, the battery unit 40 is arranged in the upward direction UP from the side members 31 of the frame 30. However, the arrangement of the battery unit 40 on the floor may reduce the space of the passenger compartment 14 for vehicle occupants and the space of the cargo bed 18 for cargo.

In this regard, in the pickup truck 10 of the present embodiment, the front end of the battery unit 40, in which the battery stacks 41A to 41D are connected integrally with one another, is arranged in the downward direction DW from the rear seat 16 in the rear cabin area. In this case, in the passenger compartment 14, the battery unit 40 is located in the downward direction DW and in the rearward direction RR from the rear seat 16. Even if the battery unit 40 is located in the downward direction DW and in the rearward direction RR from the rear seat 16, the battery unit 40 will not interfere with the occupants seated in the front seat 15 and the rear seat 16. Therefore, occupant comfort in the passenger compartment 14 is unlikely to be affected by the arrangement of the battery unit 40. Furthermore, since the front portion of the battery unit 40 is located in the cabin section 11, only a portion of the battery unit 40 is located in the cargo section 13. Thus, less space for cargo on the cargo bed 18 is occupied by the battery unit 40 than when the entire battery unit 40 is arranged in the cargo section 13.

The pickup truck 10 of the present embodiment has the advantages described below.
(1) The pickup truck 10 of the present embodiment includes the battery unit 40, in which the battery stacks 41A to 41D are connected integrally with one another. The front end of the battery unit 40 is arranged in the downward direction DW from the rear seat 16 of the cabin section 11 in the passenger compartment 14. This minimizes reduction in the space for the vehicle occupants in the passenger compartment 14 and the space for cargo on the cargo bed 18 when mounting the battery unit 40. As a result, a large-capacity battery unit 40 can be set in the pickup truck 10 even if many structures are arranged under the floor.
(2) If the battery unit 40 were to have all of the battery stacks 41A to 41D arranged in a single line in the front-rear direction or in the vertical direction, it would become difficult to provide space for the large-capacity battery unit 40 in the pickup truck 10. In this regard, in the case of the pickup truck 10 of the present embodiment, the battery unit 40 includes the first battery stack group and the second battery stack group. The first battery stack group includes the battery stacks 41A to 41C arranged in the front-rear direction, with the battery stack 41A located at the frontmost position of the first battery stack group and arranged in the downward direction DW from the rear seat 16. The second battery stack group includes the battery stack 41D, which is arranged in the upward direction UP from the first battery stack group. Therefore, in the battery unit 40, some of the battery stacks, namely, the battery stacks 41A to 41C, are arranged in the front-rear direction, and the remaining battery stack, namely, the battery stack 41D is arranged in the upward direction UP from the battery stack 41C in an overlapping manner. Thus, the battery unit 40 can be arranged in limited portions of the pickup truck 10 including the portion located in the downward direction DW and in the rearward direction RR from the rear seat 16 in the cabin section 11.
(3) The battery unit 40 is arranged inward of the two side members 31 in the vehicle width direction. Therefore, when an object hits the pickup truck 10 from the side, the object will hit the side member 31, which has high rigidity, before hitting the battery unit 40. This reduces the risk of the battery unit 40 being hit by an object.

### Second Embodiment

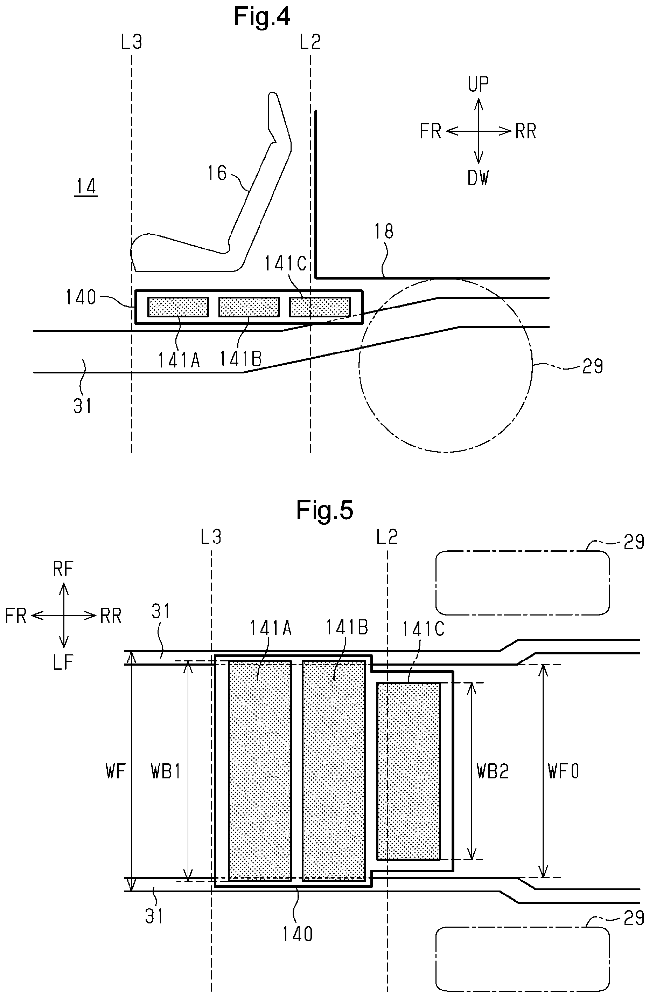

A second embodiment of the pickup truck will now be described with reference to Figs. 4 and 5. In the present embodiment, same reference numbers are given to those elements that are the same as the above embodiment. Such elements will not be described in detail. Fig. 4 is a side view showing the layout of a battery unit 140 in the present embodiment of the pickup truck. Further, Fig. 5 is a plan view showing the layout of the battery unit 140 in the present embodiment of the pickup truck.

### Structure and Layout of Battery Unit

The battery unit 140 of the pickup truck of the present embodiment includes three battery stacks 141A to 141C connected integrally with one another. The battery stack 141A that is located at the frontmost part of the battery unit 140 in the frontward direction FR is arranged in the downward direction DW from the rear seat 16 and in the upward direction UP from the side members 31. That is, the battery stack 141A is arranged below the rear seat 16 and above the side members 31. The three battery stacks 141A to 141C are arranged in the front-rear direction with the battery stack 141A positioned at the front of the group.

In Fig. 5, "WB2" indicates the width of the battery stack 141C, which is located at the rearmost part of the battery unit 140 in the rearward diction RR, and "WB1" indicates the width of the other two battery stacks 141A and 141B. Each width corresponds to the length of each of the respective battery stacks 141A to 141C in the vehicle width direction. In the same manner as Fig. 3, "WF" indicates the distance between the outer surfaces of the two side members 31 in the vehicle width direction where the battery unit 140 is located. Further, "WF0" indicates the distance between the inner surfaces of the two side members 31 where the battery unit 140 is located in the vehicle width direction. In the description hereafter, "WF" will be referred to as the outer width of the frame 30. Further, "WF0" will be referred to as the inner width of the frame 30.

The width WB1 of the two battery stacks 141A and 141B, which are located in the frontward direction FR from the battery stack 141C in the battery unit 140, is greater than the inner width WF0 of the frame 30 and less than the outer width WF of the frame 30 (WF0<WB1 <WF). In contrast, the width WB2 of the battery stack 141C, which is located at the rearmost part of the battery unit 140 in the rearward direction RR, is less than the inner width WF0 of the frame 30 (WB2<WF0). The reason for such a structure will now be described.

The battery stack 141C is arranged proximate to the rear wheels 29. As shown in Fig. 4, the side members 31 of the frame 30 is curved so as to bulge in the upward direction UP at a portion proximate to the rear wheels 29. Therefore, if the battery stack 141C has the same width as the battery stacks 141A and 141B, the battery stack 141C may interfere with the side members 31. In the pickup truck of the present embodiment, to avoid interference with the side members 31, the width WB2 of the battery stack 141C is less than the width WB1 of the battery stacks 141A and 141B.

The battery unit 140 has two battery stack groups divided in accordance with the width of the battery stacks. The first battery stack group includes the two battery stacks 141A and 141B arranged in the downward direction DW from the rear seat 16 in the rear cabin area. The second battery stack group includes the battery stack 141C arranged in the cargo section 13. Furthermore, the second battery stack group includes the battery stack 141C that has a shorter length in the vehicle width direction than the battery stacks 141A and 141B of the first battery stack group. The layout, number, and arrangement of the battery stacks in the first battery stack group and the second battery stack group may be changed in accordance with the shape and dimensions of the frame 30 or the like.

The pickup truck of the present embodiment has the advantage described below in addition to advantages (1) to (3) described above.

(4) The battery unit 140 includes the battery stacks 141A to 141C of different widths. Therefore, the battery unit 140 may have a flat shape while avoiding interference with the frame 30. This minimizes reduction in the space provided for cargo on the cargo bed 18 resulting from the arrangement of the battery unit 140.

### Other Embodiments

The above embodiments may be modified as described below. The above embodiments and the following modifications may be combined as long as the combined modifications remain technically consistent with each other.

### Structure and Layout of Battery Unit

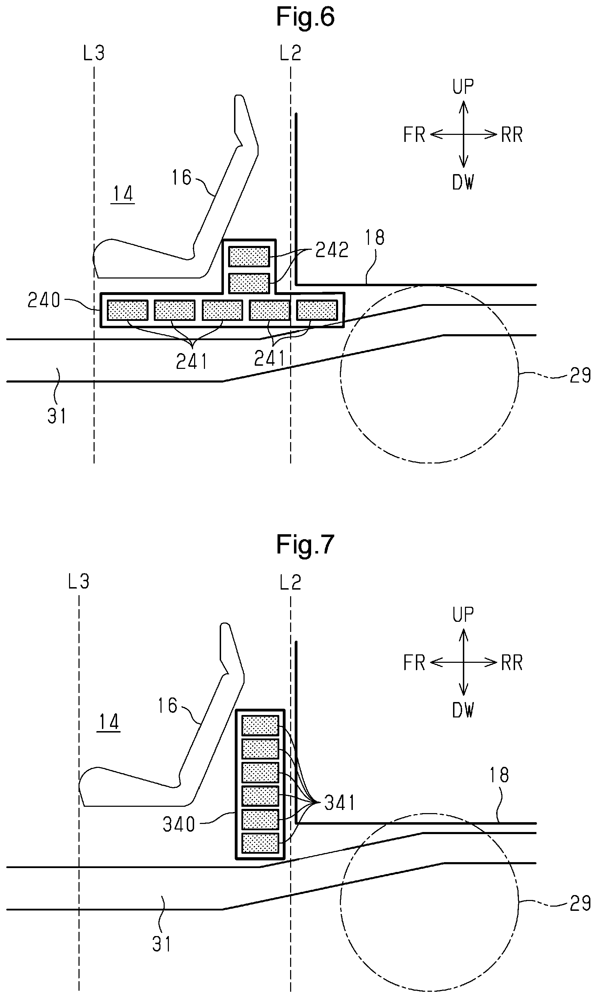

The battery stacks of the battery unit may be changed in number and layout. For example, as shown in Fig. 6, a battery unit 240 includes a first battery stack group and a second battery stack group. The first battery stack group includes five battery stacks 241 arranged in the front-rear direction from the front one, which is located in the downward direction DW from the rear seat 16. The second battery stack group includes two battery stacks 242 that are arranged in the vertical direction and located in the upward direction UP from an intermediate portion of the first battery stack group.

As shown in Fig. 7, a battery unit 340 may include battery stacks 341 that are all arranged in the vertical direction.

As shown in Fig. 7, the entire battery unit 340 may be arranged in the rear cabin area.

As shown in Fig. 7, the battery unit 340 may be arranged so that its front end is located in the rearward direction RR from the rear seat 16 in the rear cabin area.

The battery unit may be partially or entirely arranged in the downward direction DW from an upper surface of the side members 31 with respect to the vertical direction.

### Structure of Pickup Truck

The engine 20 of the pickup truck 10 does not have to be of a type with V-shaped cylinders.

The layout of the components arranged under the floor of the pickup truck 10 may be changed in any manner.

The structure of the pickup truck 10 may be changed so that the left and right sides are reversed. In other words, the fuel tank 35 may be located in the leftward direction LF, and the muffler 34 or the like may be located in the rightward direction RF.

The pickup truck 10 may be a battery electric vehicle (BEV). In this case, the engine 20, the fuel tank 35, and the like do not need to be mounted on the pickup truck 10.

Various changes in form and details may be made to the examples above without departing from the spirit and scope of the claims and their equivalents. The examples are for the sake of description only, and not for purposes of limitation. Descriptions of features in each example are to be considered as being applicable to similar features or aspects in other examples. Suitable results may be achieved if sequences are performed in a different order, and/or if components in a described system, architecture, device, or circuit are combined differently, and/or replaced or supplemented by other components or their equivalents. The scope of the disclosure is not defined by the detailed description, but by the claims and their equivalents. All variations within the scope of the claims and their equivalents are included in the disclosure.

## Claims

1. A pickup truck (10), comprising:
a cabin section (11) including a passenger compartment (14);
a hood (12A) located in frontward from the cabin section (11);
a cargo section (13) including a cargo bed (18) having an upper opening and located rearward from the cabin section (11);
a motor (22) supplied with electric power supply to generate rotational power transmitted to wheels;
a front seat (15) arranged in the passenger compartment (14);
a rear seat (16) arranged in the passenger compartment (14) and located rearward from the front seat (15); and
a battery unit (40, 140, 240, 340) that supplies electric power to the motor (22) and includes battery stacks (41A to 41C, 141A to 141C, 241, 242, 341) chargeable by an external power source, wherein
the cabin section (11) includes a front cabin area located frontward from the rear seat (16),
the cabin section (11) includes a rear cabin area located rearward from the front cabin area, and
the battery unit (40, 140, 240, 340) includes a front end arranged in the rear cabin area.

2. The pickup truck (10) according to claim 1, wherein the front end of the battery unit (40, 140, 240) is located downward from the rear seat (16).

3. The pickup truck (10) according to claim 1 or 2, wherein the battery unit (340) is entirely arranged in the rear cabin area.

4. The pickup truck (10) according to any one of claims 1 to 3, wherein the battery stacks (141A to 141C) of the battery unit (140) include a first battery stack and a second battery stack,
the first battery stack includes a rear end arranged in the cabin section (11), the second battery stack includes a rear end arranged in the cargo section (13), and
the second battery stack has a shorter length in a vehicle width direction than the first battery stack.

5. The pickup truck (10) according to any one of claims 1 to 3, wherein the battery stacks (41A to 41C, 241, 242) of the battery unit (40, 240) include a first battery stack and a second battery stack, and
the first battery stack is arranged downward from the second battery stack.

6. The pickup truck (10) according to any one of claims 1 to 5, further comprising:
a frame (30) including left and right side members (31) extending in a front-rear direction and are located downward from the passenger compartment (14) of the cabin section (11),
wherein the battery unit (40, 140, 240, 340) is located upward from the side members (31).

7. The pickup truck (10) according to claim 6, further comprising:
an engine compartment (17) located downward from the hood (12A) and including a longitudinal engine (20);
an exhaust pipe (33) configured to guide exhaust gas rearward from the engine (20); and
a drive shaft (25) configured to transmit rotational power produced by the engine (20) to rear wheels (29), wherein
the exhaust pipe (33) and the drive shaft (25) extend in the front-rear direction and are located downward from the passenger compartment (14), and
the battery unit (40, 140, 240, 340) is located upward from the drive shaft (25) and the exhaust pipe (33).
